# EUROPEAN PATENT APPLICATION

(11) **EP 4 080 135 A1**
(43) Date of publication of application: **26.10.2022**
(21) Application number: 21175367.8
(22) Date of filing: 21.05.2021
(51) Int. Cl.: F24T 10/13, F24T 10/17, F24T 10/00

(54) **STANDING COLUMN WELL SYSTEM, METHOD AND INSTALLATION SYSTEM FOR INSTALLATION OF A STANDING COLUMN WELL SYSTEM**

(30) Priority: 20.04.2021 EP 21169451
(71) Applicant: Uponor Innovation AB, 73061 Virsbo (SE)
(72) Inventor: Savolainen, Mika, 73061 Virsbo (SE); Uosukainen, Mika, 73061 Virsbo (SE); Rotso, Vesa, 73061 Virsbo (SE); Järvinen, Timo, 73061 Virsbo (SE); Päivinen, Niko, 73061 Virsbo (SE)
(74) Representative: Epping - Hermann - Fischer

(57) **Abstract**

The invention relates to a standing column well system (1), comprising a well (3) and a riser pipe (8) arranged in the well (3), wherein the riser pipe (8) is made of an uncoiled pipe (15).

The invention relates further to a method and an installation system.

## Description

The present disclosure relates to a standing column well system, a method and an installation system for installation of a standing column well system.

The majority of the ground heat wells types are horizontal, vertical and pond loop designs. Common for these types is the use of plastic piping and a sealed piping loop.

Closed-loop ground heat exchanger (GHE) technology is currently the preferred approach to exchange heat between the geological environment and a groundsource heat pump (GSHP) system. The relative popularity of the closed-loop GHE stems mainly from its long history of successes in terms of energy savings and reliability as well as the fact that designing a closed-loop GHE requires only few underground thermal parameters readily provided by a thermal response test

In contrast, the design of an open-loop system made of pumping and injection wells may require a heavy field investigation program involving many exploratory boreholes, stratigraphic analyses, pumping, and tracer tests. If suitable hydrogeological conditions are observed and indicate that the local aquifer is productive enough to sustain the operation of GSHPs, an open-loop system may prove to be a more cost effective solution than closed-loop system. However, completion of hydrogeological investigations requires time and resources, and many designers will prefer the more linear design process associated with closed-loop GHE approaches.

An alternative approach to the well-known closed- and open-loop GHEs is the standing column well system. Standing column well systems present a strong potential for energy savings, especially in dense urban areas with suitable geological conditions where lack of space constitutes an impediment to the use of closed-loop systems. A standing column well system typically consists of a long open borehole (e.g. 75-450 m long) mostly drilled in bedrock and usually having a diameter of 150 mm. To prevent the surface unconsolidated soils falling down into the open hole, the overburden is cased from the surface to the rock basement with a steel or PVC pipe. The most common design for commercial systems pumps groundwater at the base of the well with a submersible pump installed within a riser pipe screened or slotted at its base. For example, the pumped groundwater is then directed to a building heating, ventilation, and air-conditioning (HVAC) system (often via an intermediate heat exchanger). Unlike open-loop systems, the pumped groundwater is reintroduced in the same well below the dynamic level in the annular space of the standing column well system.

With a deeper reaching well, and pipe, more ground heat could be harnessed, and the efficiency of the system could be improved, thus Deep Ground Heat Wells (DGHW), e.g. deep ground standing column well systems, reaching several kilometers are desired.

It is an object of the present disclosure to provide a concept for a standing column well system, which contributes to an improved and cost-efficient installation.

According to a first aspect of the present disclosure, a standing column well system is disclosed, comprising a well and a riser pipe arranged in the well. The riser pipe is made of an uncoiled pipe.

In the disclosed standing column well system an intially coiled pipe is used for the riser pipe. The pipe can initially be coiled and is uncoiled for installation. Alternatively, as another aspect which can be claimed separately, the riser pipe can be provided in some other form, e.g. as extruded or even extruded at the installation site. Thus, very long one-piece pipe, e.g. more than 50 m, is provided to the installation site. Thus, the system benefits from using a cost-effective pipe and easy installation. As an advantage significantly longer pipes for the riser pipe can be used than typical rod-like and rigid pipes of conventional systems and installations, which for example would be 10 meters long and which therefore would necessarily be coupled together after several meters. Further, a very light and cheap riser pipes can be provided. Further, the riser pipe can be flexible or bendable, which provides good handling and installation of the riser pipe. The invention in particular enables very long riser pipes being made with one or only little pipe sections and thus there is no or only little need for interconnecting pipes. For example, the disclosed standing column well system allows the use of a one-piece pipe, e.g. a plastic pipe, that has a length up to 500 m or even one or more kilometers. In embodiments, the riser pipe comprises a single uncoiled pipe or several uncoiled pipes being (fluidically) interconnected to each other. A very time and cost consuming installation can be avoided or at least simplified by the disclosed system. A cost and time intense ground heat well pipework, e.g. a deep ground heat well pipework, which is made of straight rod-like pipes with many interconnections, is efficiently avoided.

The riser pipe also provides advantages when it comes to transport of the pipe to the installation side, for example in coils, and the flexibility at the installation side. Handling and transport logistics of the pipe in general is improved.

Therefore, the disclosed system provides an improvement with regard to efficiency, flexibility, costs and installation time. Further, a corrosion resistance compared to traditional metal or composite pipes with threaded joints is significantly improved.

According to the disclosed system, for example, a pipe is uncoiled from a pipe coil and used as the riser pipe. The uncoiled pipe can have a length of up to 500 m, but also a full length of the well is possible, e.g. several kilometers, e.g. if the pipe is extruded. For example, an outer diameter of the uncoiled pipe and thus the riser pipe is about 110 mm. An exemplary wall thickness of the uncoiled pipe and thus the riser pipe is about 15,1 mm. An exemplary borehole, e.g. well diameter, is about 200 mm.

The bottom end is the end of the riser pipe which enters the well first during installation and which is deepest after having the riser pipe fully installed, e.g. fed down into the well.

Note that here and in the following, feeding can mean active feeding, e.g. by any device or drive or passive feeding, e.g. by gravitational forces alone, or a combination thereof.

According to an embodiment, a bottom weight is attached to a bottom end of the riser pipe. The bottom weight (or ballast), for example, is a rod-like or cylindrical-like weight, which is attached to the bottom end of the riser pipe. The bottom weight ensures an easy installation of the riser pipe deep into the well, since the pipe has a higher overall mass and weight. For example, the pipe can be guided comparatively easy into the well.

The bottom weight assists or even serves for the insertion of the pipe into the well. Due to the weight it pulls the pipe into the well or assists other systems, e.g. a feeding apparatus (see below). Further, the bottom weight contributes to straightening the riser pipe to be fed into the well, for example depending on the material, density and/or the shape of the pipe. This is particularly relevant for comparatively light and/or flexible pipes like plastic pipes, in particular with a density below 1 kg·m⁻³. For example, a coiled pipe initially does not have a straight, e.g. essentially linear, shape after being uncoiled. For example, the uncoiled pipe could be wound, twisted or distorted, e.g. the pipe has a helical shape, prior to being fed into the well. Further, depending on the material used for the coiled pipe, the pipe could be floating on ground water due to such winding and/or its light weight, being lighter than water (density below 1 kg·m⁻³). Such shapes would render the installation of such floating, winding pipe into several kilometers deep borehole impossible. In order to compensate for the above problems, a bottom weight is attached to the end of the pipe, e.g. in order to straighten the pipe and/or compensating any floating forces. Thus, the riser pipe can be easily fed into the well with the bottom weight first.

A required mass of the bottom weight depends on the depth of the well. The needed mass could be in the order of thousands of kilograms. In particular, the mass of the bottom weight is adapted to the overall length of the riser pipe.

According to an embodiment, the riser pipe is a plastic pipe comprising one or more polyolefins or being made of one or more polyolefins, in particular the riser pipe is a cross-linked PE pipe (cross-linked Polyethylene), a PE-X pipe or a PE-RT pipe or wherein the riser pipe is made of cross-linked PE, PE-X or PE-RT. In other words, the riser pipe comprises a polyolefin pipe, e.g. a cross-linked PE pipe, a PE-X pipe or a PE-RT pipe.

Using such pipes and/or material, e.g. PE-X, pipes with very little weight can be used. Further, the embodiment gives the possibility to use shrink fit connection methods (see below). Further, using this type of pipes and materials, normal PE pipes could be avoided. Thus, a riser pipe like a PE-X pipe can be used that is very temperature stable, comprises a high pressure resistance and comprises a high resistance against cracks and crack propagation. For example, cross-linked polyethylene is temperature resistant up to 120 °C and is characterized by high stress crack resistance.

According to an embodiment, the riser pipe is a metal plastic composite pipe or metal pipe or is made of metal plastic composite material or metal. We refer to the above effects and advantages. When it comes to metal plastic composite pipes or metal pipes, such pipes typically have a density larger than 1 kg·m⁻³ such that no floating in the ground water happens. Nevertheless, in an embodiment such pipes might be attached to the bottom weight in order to simplify the feeding down into the well and/or to straighten the pipes. Since they are not lighter than water, they might require no or less weighting, e.g. a bottom weight with less mass.

According to an embodiment, the riser pipe is counter wound after being uncoiled and before being inserted into the well. The coiled riser pipe is wound, e.g. helically after being uncoiled from the coil. In order to better straightening the pipe, the pipe is counter-wound before being inserted into the well. For example, a counter winding apparatus is used, wherein the pipe is mechanically, in particular plastically processed, to be straightened. For example, axial stress is provided to the pipe. In particular in combination with the bottom weight, the riser pipe is efficiently straightened and can by efficiently fed into the well as one straight riser pipe. The counter winding apparatus can be part of an installation system which continuously uncoils, counter winds and feeds the riser pipe into the well.

According to an embodiment, the riser pipe comprises at least two pipe sections, which are serially interconnected, in particular by a shrink fit connection. A pipe section for example is an uncoiled pipe, which is made of one piece. In other words, the riser pipe could be comprised of several uncoiled pipes being connected, e.g. two or four pipes with a length of approx. 500 m each. In particular, only a few pipe sections are necessary to form the riser pipe. Thus, a drastically reduced amount of sections (single pipes) is provided compared to conventional systems. The pipe sections are preferably connected by a shrink fit connection, wherein no mechanical locking is necessary to make the pipe connections. Such shrink fit connection is for example made by a cold expansion of the pipe which is then shrunk onto a pipe connection element, e.g. a fitting. No heating of the respective pipes is required for the connection. Such connection is very advantageous with regard to avoiding pressure losses. In particular, in the region of a connection (e.g. between two pipe sections or the riser pipe and the bottom weight) no or only little space is required, e.g. the overall diameter is not or only slightly increased compared to the pipe outer diameter. This contributes to the improved installation. Further, no mechanical locking or mechanical connections elements like metal rings or the like are necessary, which surround the riser pipe in this connections region/areas.

According to an embodiment, the bottom weight is connected to the bottom end of the riser pipe by a shrink fit connection. It is referred to the above mentioned effects and advantages. A connection adapter could be provided, which is connected to the bottom end of the riser pipe and the bottom weight respectively.

According to an embodiment, the bottom weight comprises one or more bottom weight sections, which are serially interconnected. In other words, the bottom weight is formed by one or more bottom weight sections. The bottom weights are mechanically locked to each other, e.g. bolt or screw-bolt connections. Thus, the bottom weight is sectioned or divided into smaller, easier to handle components. Thus, the bottom weight compensates for the limited space due to the inner well diameter, wherein there is no room for bigger weights. For example, with a borehole diameter being 20cm, producing of required mass with a single piece of material would be difficult. Further, the transportation and handling of each section is easier compared to a bottom weight having the same mass and being made of only one piece.

According to an embodiment, a maximum diameter of the bottom weight does not exceed or only exceed about 30 % over the outer diameter of the riser pipe. E.g. the outer diameter of the bottom weight is approx. 130 mm vs. 110 mm of the riser pipe. Thus, the installation is easy to handle, for example.

According to an embodiment, the bottom weight and/or the bottom end of the riser pipe comprises one or more openings in order that fluid can enter or leave the riser pipe at the bottom end. This allows that fluid can flow into or out of the riser pipe at the bottom end region. The fluid is necessary for heat energy transfer, e.g. from and/or towards a heat pump. The above mentioned connection adapter could comprise such opening(s), which is - at the one hand - connected to the top end of the bottom weight and - at the other hand - connected to the bottom end of the riser pipe, e.g. by a shrink-fit connection as above.

According to a second aspect, a method for installation of a riser pipe of a standing column well system, in particular a standing column well system according to above aspect, is disclosed. The method comprises the steps of:
- uncoiling a riser pipe from a pipe coil,
- feeding the riser pipe into the well.

In general, the method enables the above mentioned functions, effects and advantages with regard to the first aspect. The above mentioned embodiments with regard to the first aspect similarly apply. Vice versa, embodiments and details of the second aspect similarly apply to the other aspects.

The method provides that a pipe is uncoiled above ground, and - after having attached the bottom weight - is basically continuously uncoiled and fed into the well, e.g. until the coil is empty. This means, slightly feeding backwards is possible, if the bottom weight should have been stuck or in order to axially stress the pipe against the mass of the bottom weights. Optionally, the complete riser pipe can be pulled out of the well, e.g. coiled backwards, particularly for inspection or maintenance.

According to an embodiment - before the riser pipe is fed into the well - a bottom weight is attached to a bottom end of the uncoiled riser pipe and the riser pipe is fed into the wall with the attached bottom weight. We refer to the above mentioned functions, effects and advantages with regard to the first aspect.

According to an embodiment the riser pipe is guided through a counter winding apparatus for counter winding the riser pipe, before the riser pipe is fed into the well. We refer to the above description. Due to coiled pipe, the pipe has a pre-winding after being uncoiled from the coil. The pre-winding must be compensated and the pipe is straightened before it enters the well and is guided downwards into the ground. The counter winding apparatus is provided for winding the pipe in a direction opposite to the winding after uncoiling. E.g. the apparatus predeterminedly bents the pipe in opposite direction. The apparatus may comprise a mechanical structure, in which the pipe is guided along a predetermined path, e.g. around 90° in order to provide axial stress and bending forces to the pipe for straightening. The apparatus may comprises guide sections, rolls and the like in order to predeterminedly route the pipe. For example, in combination with the attached bottom weight, stress and/or forces are provided to the pipe in order to create the counter-winding forces. After the counter winding apparatus the pipe is straightened and can be fed into the comparatively small well over the very long distance up to several kilometers. The counter winding apparatus may be a passive device, which only guides the pipe, but does not actively control a movement of the pipe, e.g. a feeding speed. Thus, for example no electronic devices are provided. The apparatus may be arranged above ground.

According to an embodiment, the feeding of the riser pipe is controlled by a pipe feeding apparatus, which is configured for uncoiling the riser pipe from the pipe coil, for feeding the riser pipe forwards into the well, for slowing or braking the riser pipe feeding and feeding the riser pipe backwards. The pipe feeding apparatus essentially controls the movement of the pipe. The pipe feeding apparatus can provide axial stress into the pipe, e.g. by slowing down or moving backwards to provide counter forces against the bottom weight. E.g. the pipe feeding apparatus is a linear cable engine. The pipe feeding apparatus is capable of handling the (flexible) pipe, e.g. feeding the pipe, braking the pipe, and holding the pipe against the straightening axial force in the pipe. The pipe feeding apparatus comprises several mechanical components to guide and move the pipe, e.g. one or more of the following: Rolls, wheels, tracks, caterpillar tracks, a conveyer belt, a mechanical grip apparatus and/or the like. As one example, one or more wheel pairs are provided, which grip the pipe in between. Forces can be applied to the pairs of wheel to apply a wheel grip force. These rolls/wheels are actively controlled and driven to control the pipe movement. The pipe feeding apparatus may be arranged above ground.

According to an embodiment, a pipe brake apparatus is provided which can stop the feeding of the riser pipe. The pipe brake apparatus is for example a mechanical device for locking the pipe in its current situation. E.g. one or more wheel pairs as above are provided, which guide the pipe in between and which can be locked to stop a movement of the pipe. Such pipe brake apparatus is for example advantageous in order that a pipe section could be connected another pipe section, e.g. after fully uncoiling a pipe and attaching another pipe thereto. The pipe brake apparatus is arranged above ground.

According to an embodiment, the pipe coil and/or the uncoiled riser pipe is preheated prior to be fed into the well. E.g. the pipe could be guided through a heat chamber arranged separately to the coil. Alternatively, the pipe coil is arranged in such heat chamber. By preheating the pipe, e.g. at 60°, the straightening can be done more easily. For example, in cold environments, e.g. in sub-zero conditions, like in northern European countries, preheating provides a better and more flexible handling of the pipe to be moved and counter wound.

According to an embodiment, after fully uncoiling the riser pipe from the pipe coil, the feeding of the riser pipe is stopped and a top end of the fully uncoiled riser pipe is fluidically coupled to a further pipe being uncoiled from a further pipe coil. We refer to the above disclosure. E.g. in the stopped state the pipes are connected by a shrink-fit connection. Afterwards, the brake is released again. Thus, the riser pipe comprises at least two sections, i.e. single pipes, as described above. In other words, the riser pipe is prolonged.

The pipe feeding apparatus, the counter winding apparatus and the pipe brake apparatus can be part of an installation system which continuously uncoils, counter winds and controls the movement of the riser pipe into the well.

According to an embodiment, the step of attaching the bottom weight to the bottom end of the riser pipe comprises the sub-steps of:
- at least partially inserting the bottom weight into the well such that the bottom weight is accessible from outside the well,
- locking the bottom weight in its position relative to the well by a locking device (e.g. a locking plate or other mechanical means),
- attaching the pipe to the bottom weight.

Thus, the bottom weight, which has a sufficient weight, e.g. sufficient to counterbalance the buoyancy, can be easily attached to the pipe. For example, the insertion into the well is done with the help of a lifting equipment, e.g. the lifting equipment comprising a crane, support chains or the like. For example, the bottom weight is locked in the region of a well top side or a well opening. The locking can be done by screwing or bolting the bottom weight to the well or the opening region of the well. For example, the well opening is formed by a cylindrical section, such as a metal manhole. The bottom weight can be locked to this cylindrical section. For example the bottom weight hangs into the well, wherein the bottom weight is locked at the top side such that the pipe can be easily attached to. Further details will follow in the detailed description of embodiments.

According to an embodiment, the bottom weight comprises at least a first bottom weight section and a second bottom weight section, and wherein the step of attaching the bottom weight to the bottom end of the riser pipe comprises the sub-steps of:
- at least partially inserting the first bottom weight section into the well such that the first bottom weight section is accessible from outside the well,
- locking the first bottom weight section in its position relative to the well by a locking device,
- providing the second bottom weight section and firmly connecting the first and second bottom weight sections, and
- attaching the bottom end of the riser pipe to the second bottom weight section.

This applies to a bottom weight which is separated into at least two separate sections. After connecting the second bottom weight to the first bottom weight, there might be further sub-steps prior to attaching the riser pipe:
- moving the interlocked first and second bottom weight sections into the well, such that only the second bottom weight section is accessible from outside the well;
- locking the second bottom weight section in its position relative to the well by the locking device.

According to third aspect, an installation system for installation of a riser pipe of a standing column well system, in particular a standing column well system and a method according to the above aspects, is disclosed. The installation system comprises a pipe coil for a riser pipe to be uncoiled.

In general, the installation system enables the above mentioned functions, effects and advantages with regard to the first and second aspects. The above mentioned embodiments with regard to the first and second aspects similarly apply. Vice versa, embodiments and details of the third aspect similarly apply to the other aspects.

According to an embodiment, the installation system comprises at least one of the following:
- a bottom weight to be attached to a bottom end of the riser pipe;
- a counter winding apparatus for counter winding the riser pipe;
- a pipe feeding apparatus configured for uncoiling the riser pipe from the pipe coil, for feeding the riser pipe forwards into the well, for slowing or braking the riser pipe feeding and feeding the riser pipe backwards; and/or
- a pipe brake apparatus configured to stop the feeding of the riser pipe.
It is referred to the above description regarding embodiments, functions, effects and advantages.

According to an embodiment, the installation system comprises a heat system in order to preheat the pipe coil and/or the riser pipe prior to feeding the riser pipe into the well. It is referred to the above description.

Further advantages, features and functions are given in the following exemplary embodiments of the invention, which are explained in connection with the figures. Identical, similar or similarly acting elements are provided with the same reference signs in the figures. Not necessarily all shown and describes elements are provided with reference signs for sake of clarity and visibility.

In the figures:
Figure 1 shows a schematic view of a standing column well system,
Figures 2 to 6 schematic views of an installation system for installation of a riser pipe of a standing column well system at different stages,
Figure 7 a schematic flow diagram of a method for installation of a riser pipe with the installation system according to figures 2 to 6,
Figures 8 to 18 different views of a bottom weight and its attachment to the riser pipe,
Figure 19 and 20 perspective views of connecting to pipes together, and
Figure 21 a counter winding apparatus of the installation system.

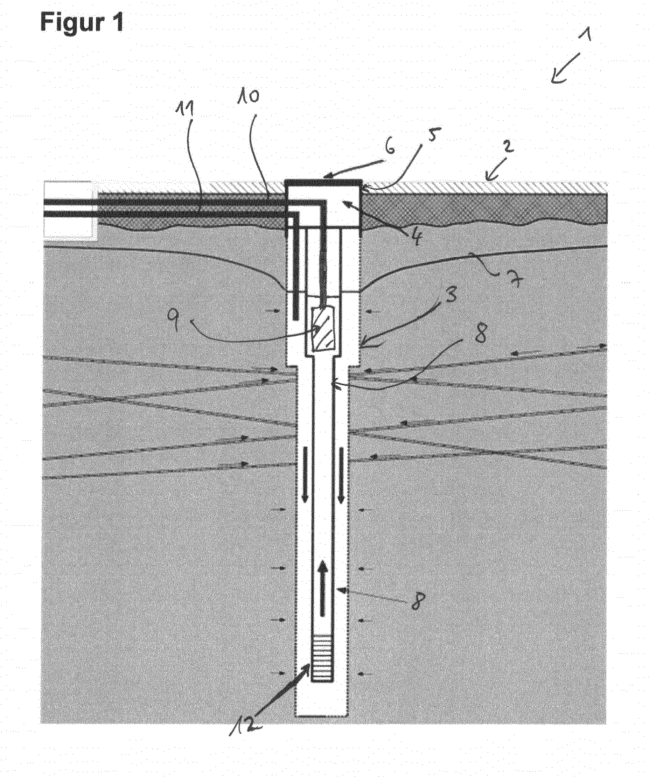

Figure 1 (taken from S. Gehlin, in Advances in Ground-Source Heat Pump Systems, 2016) shows a schematic, exemplary standing column well system 1. The standing column well system 1 comprises a well 3 (bore hole) extending into the ground 2. The well 3 is exemplarily about 2 kilometers long and for example drilled in bedrock, amongst others. The well 3 has a diameter of 200 mm at the top level and 150 mm at the lower level, but there might also be essentially a constant diameter of 200 mm over the whole length. At the top, the well 3 has a manhole 4. In particular, to prevent the surface unconsolidated soils falling down into the open well 3, the overburden may be cased from the surface to the rock basement with a metal, e.g. steel, or PVC pipe 5. The well 3 may be sealed or covered by a cover 6. Into the well 3 a riser pipe 8 is arranged, which has a smaller outer diameter than the surrounding inner wall of the well 3. Within the riser pipe 8, a pump 9 is placed below the water level 7, e.g. the ground water level. The riser pipe 8 has a bottom end 12, which is screened or slotted. Via the pump 9, which may a submersible pump, groundwater is pumped from the bottom end 12 over the riser pipe 8 into an outlet pipe 10. Typically, the pumped groundwater is then directed to a building heating, ventilation, and air-conditioning (HVAC) system (often via an intermediate heat exchanger). Afterwards, the pumped groundwater is reintroduced via inlet pipe 11 into the same well 3 below the dynamic water level 7 in the annular space of the riser pipe 8.

The above description is only a simplified characterization of a standing column well system, which is not limited to the above description. Other embodiments are possible. Note that further details are omitted for sake of intelligibility and not discussed herein. In the following, it is focused on the riser pipe 8 and its installation.

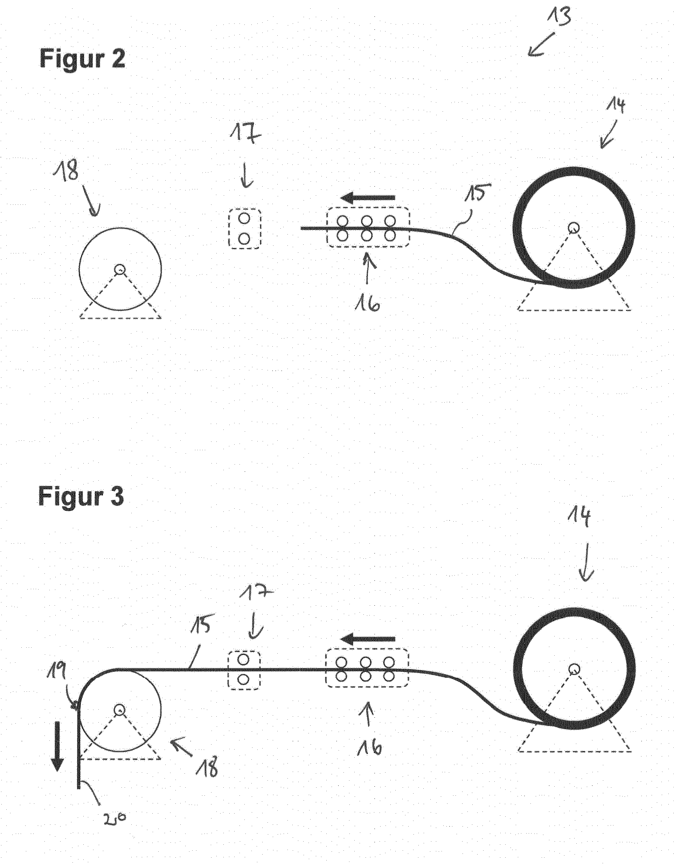

Figures 2 to 6 schematically illustrate an installation system 13 for installation of a riser pipe 8 of a standing column well system 1.

The installation system 13 comprises a pipe coil 14, which comprises a plastic pipe 15 to be uncoiled. The pipe coil 14 is for example arranged on a respective structure or support in order to be rotated for uncoiling the pipe 15. The plastic pipe 15 is a cross-linked PE pipe, a PE-X pipe. The plastic pipe 15 has an outer diameter of approx. 110 mm. The pipe 15 comprises an entire length of approx. 500 m. The plastic pipe 15 is used for the riser pipe 8 when it is installed, i.e. fed into the well 3. Thus the pipe 15 and the riser pipe 8 can be understood synonymously in the present disclosure.

The installation system 13 further comprises a pipe feeding apparatus 16, a pipe brake apparatus 17 and a counter winding apparatus 18.

The pipe feeding apparatus 16 is configured to control linear movement of the plastic pipe 15, e.g. uncoiling from the pipe coil, feeding forwards and backwards, for slowing and braking movement of the plastic pipe 15. The feeding apparatus 16 can be designed as mentioned above and may comprise one or more wheel pairs, between which the pipe 15 is arranged. By controlling the wheels and a wheel friction force to grip the pipe 15, the pipe 15 can be pulled/pushed into the desired direction. To control the pipe 15, the pipe feeding apparatus 16 comprises one or more drives or the like. For example, the pipe feeding apparatus 16 is operated electrically and/or hydraulically and/or pneumatically.

The pipe brake apparatus 17 is configured to stop a movement of the pipe 15, when it guided through the pipe brake apparatus 17. The pipe brake apparatus 17 can be designed as mentioned above. For example the brake apparatus 17 is a conveying system that is in contact with the pipe by means of mechanical grip or friction, e.g. a wheel-style or caterpillar track-style or conveyer belt style or moving hydraulic clamp style apparatus. For example, the pipe brake apparatus 17 is operated mechanically, e.g. manually, electrically and/or hydraulically and/or pneumatically.

The counter winding apparatus 18 is designed to compensate the winding the pipe 15 has after being uncoiled from the coil 14. In order to better straightening the pipe 15, the pipe 15 is counter-wound before being inserted into the well 3. The counter winding apparatus 18 mechanically, i.e. plastically, straightens the pipe 15.

After uncoiling, the pipe 15 is moved, e.g. in a horizontal way, through the pipe feeding apparatus 16, the pipe brake apparatus 17 to the counter winding apparatus 18, as can be seen from the figures 2 to 6. The counter winding apparatus 18 is preferably arranged next to the well 3 or above the well 3. The counter winding apparatus 18 preferably is designed such that the pipe 15 runs directly into the well 3 after leaving the counter winding apparatus 18. In particular, the pipe 15 essentially enters the the well 3 along a longitudinal axis, e.g. bore axis, of the well 3.

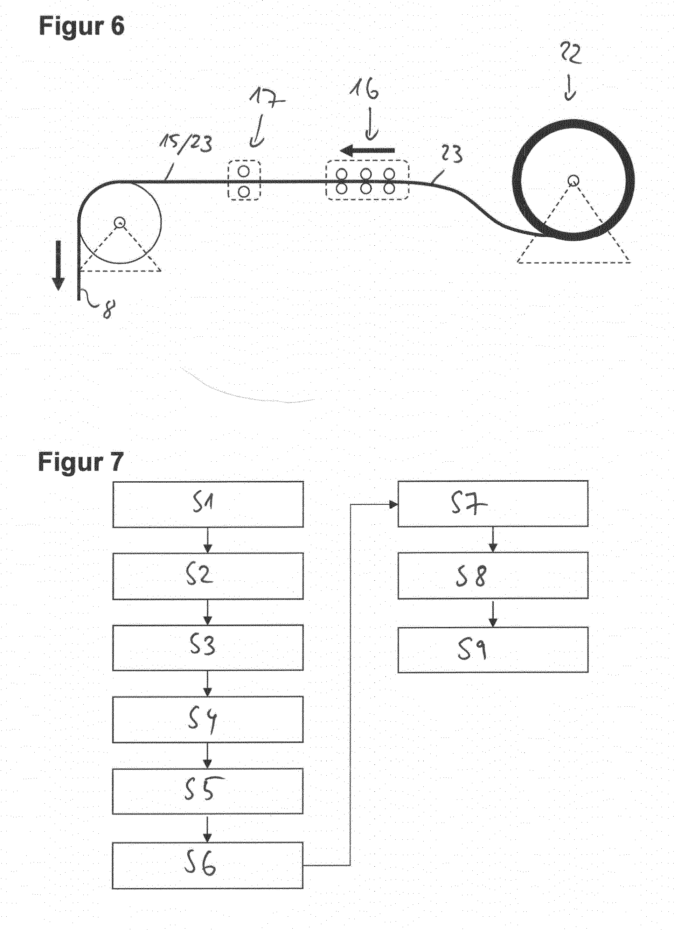

The installation system 13 is provided to continuously uncoil the pipe coil 14 and to feed or guide the uncoiled pipe 15 into the well 3 in order that the riser pipe 8 for the standing column well system is installed. The installation system 13 and the installation of the riser pipe 8 is described in the following with regard to a method for installation, schematically shown in the flow chart of figure 7.

In a first step S1 (see figure 2), the installation system 13 is initially set up. The plastic pipe 15 is slightly uncoiled from the coil 14 and provided to the pipe feeding apparatus 16. The pipe 15 is further provided to the pipe brake apparatus 17 and to the counter winding apparatus 18, manually and/or by already using the pipe feeding apparatus 16 for moving the pipe 15.

In a next step S2 (see figure 3), a bottom end 19 of the pipe 15 is attached to a bottom weight 20. The bottom weight 20 comprises a mass, which is sufficient to overcome a buoyancy of the pipe, e.g. a mass of several 100 kilos. The connection of the bottom weight to the bottom end 19 of the pipe 15 is made by a shrink-fit connection as described above and below. Exemplarily, a maximum diameter of the bottom weight 20 does only exceed about 30 % over the outer diameter of the pipe 15, the later riser pipe 8. For example, the outer diameter is approx. 130 mm.

In a next step S3 (see also figure 3), the pipe 15 is fed down into the well 3 with the bottom weight 20 first, in order that the pipe 15 gets straightened into the well 3 (see arrow). Thus, the riser pipe 8 gets installed. Please note that feeding means active and/or passive feeding as described above.

Due to the bottom weight 20, i.e. its mass, and the counter winding of the pipe 15 the riser pipe 15 is straightened in order that even the coiled plastic pipe 15 can be used as the riser pipe 8.

In step S3, the pipe 15 is continuously driven by the pipe feeding apparatus 16, while it is continuously uncoiled from the coil 14. The movement of the pipe 15 is controlled by the feeding apparatus 16 and/or the brake apparatus 17. While the pipe 15 is moved, the brake of the pipe apparatus is released to allow for the movement of the pipe. Further, while the pipe 15 is fed down in the well 3, it is continuously guided through the counter winding apparatus 18 where the pipe 15 is counter wound to compensate the pre winding it got from being initially coiled on coil 14.

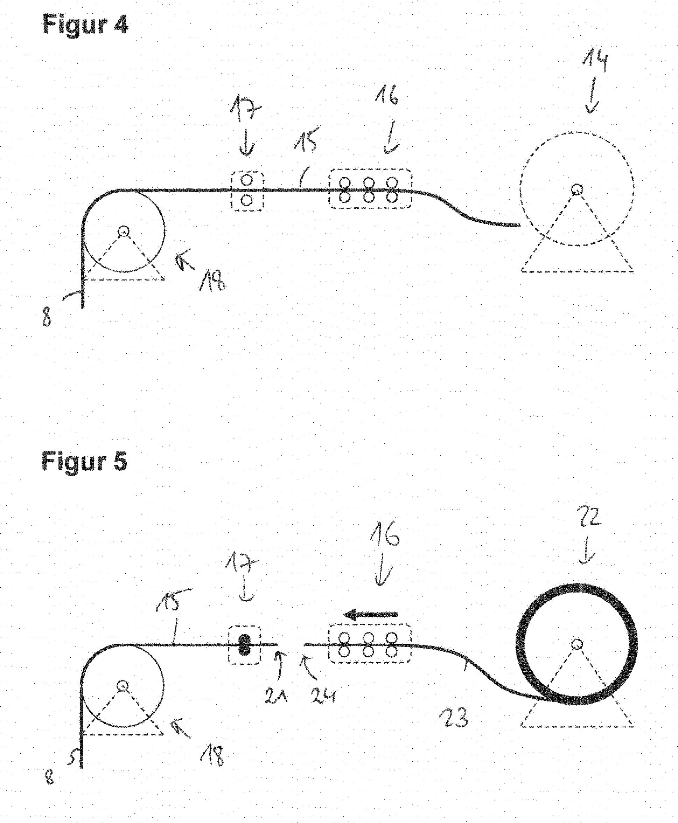

If a longer riser pipe 8 is needed than the coil 14 allows, the pipe 15 needs to be connected to a further pipe of a coil. Thus, in a next step S4 the entire pipe 15 is uncoiled (see figure 4).

In a step S5 (see figure 5), the first pipe 15 is fed until the top end 21 is arranged between the brake apparatus 17 and the pipe feeding apparatus 16.

In a step S6 (see also figure 5), the brake apparatus 17 is set to brake/stop the movement of the pipe 15. For example, a wheel pair is moved together to clamp the pipe 15 in its position. A mechanical brake or similar braking method is alternatively or additionally possible.

In a next step S7 (see also figure 5), another pipe coil 22 is provided, e.g. on the same structure or support, which comprises a further plastic pipe 23 to be uncoiled. The coil 22 and its pipe 23 is similar to the first pipe coil 14 and its pipe 15. The further pipe 23 is provided to the feeding apparatus 16. A bottom end 24 of the further pipe 23 is fed next to the top end 21 of the first pipe 15.

In a next step S8 (see figure 6), both pipes 15 and 23 are connected. The connection is made by a shrink-fit connection as described above and below. Note that the connection of the pipes 15 and 23 can also occur at another point of the installation system 13, e.g. between the coil 22 and the feeding apparatus 16.

In a next step S9 (see also figure 6), the brake apparatus 17 is set to allow movement of the connected pipes 15, 23 (clamping force of wheel pair reduced, for example) and the connected pipes are fed downwards into the well 3 as described before. Thus, the riser pipe 8 comprises at least two pipes or pipe sections.

The described method and installation system allow to install a standing column well system 1 with the riser pipe 8 being made of uncoiled plastic pipes, i.e. PE-X pipes. In order to install the pipe 8, the bottom weight 20 and in particular the counter winding apparatus 18 are provided. The above mentioned effects and advantages are achieved.

In one or more further steps, in order to feed the riser pipe 8 into the well 3, movement of the pipe 8 (i.e. the pipe 15 and/or 23) could be stopped or even changed to backwards (direction out of the well 3), if needed. E.g. if the riser pipe 8 is stuck during installation or other installations circumstances require, the riser pipe and the bottom weight could be slightly moved back or even retracted from the bore hole. E.g. in order to axially stress the riser pipe 8 against the mass of the bottom weight 20, the pipe 15, 23 could be moved backwards.

The bottom weight 20 and/or the bottom end 19 of the riser pipe 8 comprises one or more openings in order that fluid can flow enter or leave of the riser pipe 8, which is also described below in an exemplary embodiment.

The riser pipe 8, i.e. the pipes 15 and 23, could be preheated prior to being counter wound and fed into the well 3. For example, the pipe coils 14 and 22 can be preheated or arranged in a heat chamber. For example, heating occurs at 60°.

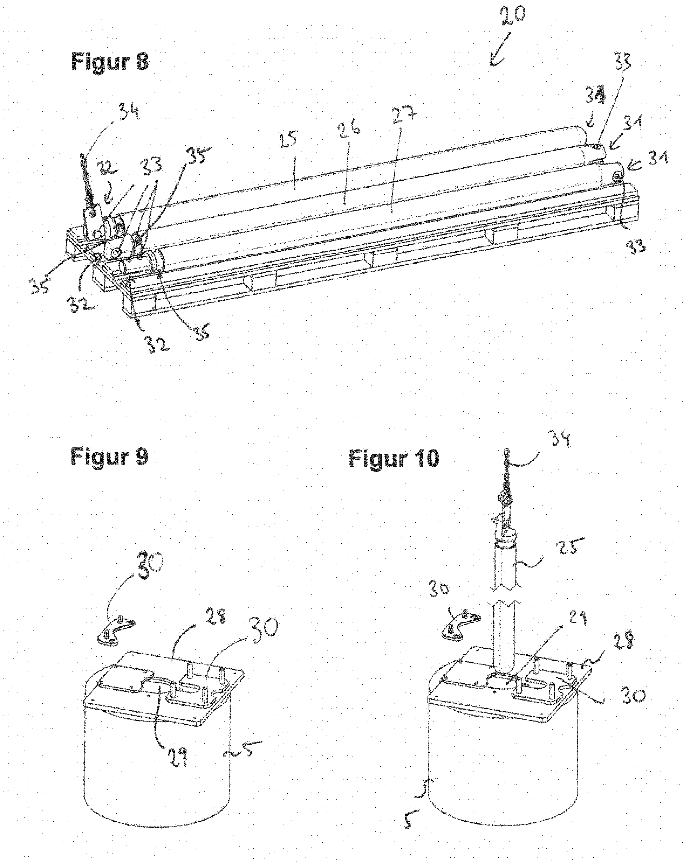

Figures 8 to 18 detail an embodiment of the bottom weight 20 and its attachment to the riser pipe 8 (i.e. pipe 15). The installation is done in sub-steps of the above described step S2 according to figure 7.

Figure 8 shows an embodiment of the bottom weight 20, which comprises three bottom weight sections 25 to 27, namely a lower section 25, an intermediate section 26 and a top section 27. Prior to installing them, they might be delivered to the installation side by means of a pallet. In particular, the weight, size and shape of the bottom weight 29 and its sections 25 to 27 is made for ease of logistics. The bottom weight sections 25 to 27 are rod-like structures. These bottom weight sections 25 to 27 are attached to each other serially and connected in series to the bottom end 19 of the riser pipe 8. In the present embodiment, each bottom weight section 25 to 27 approx. is 1 m long and weights 250 kg. Further, in the present embodiment, each bottom weight section 25 to 27 is made of cast iron. Each bottom weight section 25 to 27 can also be named as torpedos. Generally spoken, the bottom weight 20 is heavy material, with section weights and dimensions to allow transportation, lifting and handling.

Figures 9 to 14 exemplarily shows the first stages of the bottom weight installation, which begins with the lower section 25.

In a first sub-step of step S2 above as shown in Figure 9 the installation is prepared. Figure 9 shows a cylindrical rigid section, e.g. the metal pipe 5 (see figure 1), which is arranged at the entrance of the well 3. At the top side of the metal pipe 5, a ground plate 28 is placed, which has an opening 29, e.g. a central opening. The opening 29 is at least large enough in order that the bottom weight sections 25 to 27 can be guided through. At least two locking plates 30 forming a locking device are arranged or set aside, which can be arranged in different positions relative to the opening 29 on the ground plate 28. Instead of the locking plates 30, other locking mechanism and/or locking elements can be used.

In a next sub-step, the lower section 25 of the bottom weight 20 is provided and at least partially inserted into the opening 29 of the ground plate 28. As can be seen in figure 10, a bottom end 31 of the lower section 25 is rounded or spherical for better and deep installation into the well 3 afterwards. At the top end 32, the lower section 25 comprises a joint element 33 (mounting structure with one or more mounting holes), at which the lower section 25 can be engaged and handled by a lifting equipment 34. For example, the lifting equipment 34 comprises a chain and a shackle, to which the bottom weight, e.g. the lower section 25 (and the other sections 26 and 27) can be attached.

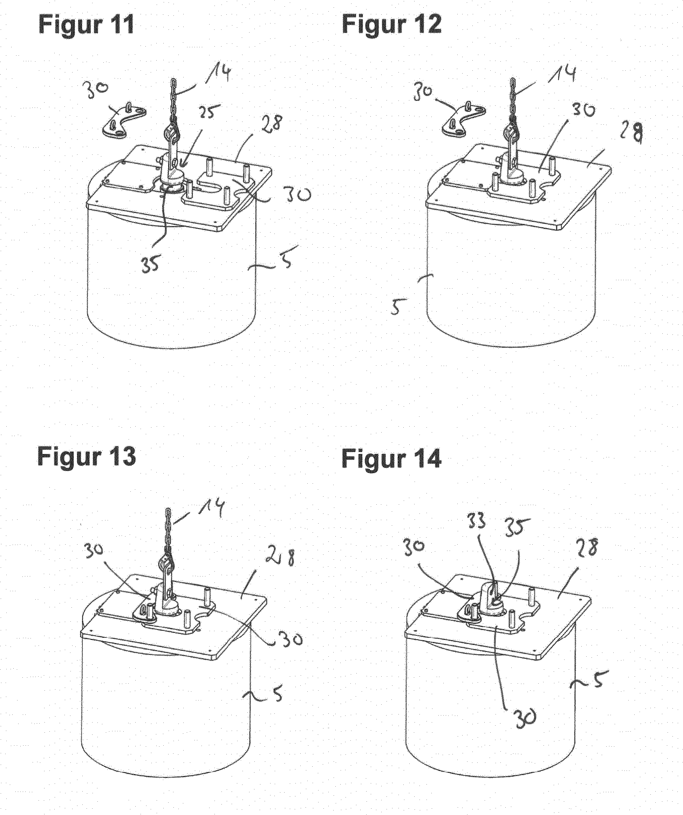

In a next sub-step (see figure 11), the lower section 25 is lowered into the well 3, i.e. the metal pipe 5, until a predetermined position relative to the well 3 with regard to its longitudinal axis (bore hole axis). The lower section 25 protrudes partially out of the metal pipe 5 (well 3) to be accessible from outside the well 3, in particular the top end 32 is accessible from outside. In particular, the lower section 25 is arranged such that an annular groove 35, arranged at a region at the top end 32, is placed slightly above the ground plate 28, e.g. at the level of the locking plates 30.

In a next sub-step (see figures 12 and 13), the lower section 25 is locked and the lateral movement of the torpedo is prevented. In particular, the locking plates 30 are moved, e.g. slid on the ground plate 28, to engage the lower section 25. In particular, the locking plates 30 surround the lower section 25 and one or both locking plates 30 at least partially engage the annular groove 35 by a form-fit connection. Further the locking plates 30 are locked to each other. Thus, the lower section 25 is mechanically locked in its position relative to the well 3, e.g. with regard to the longitudinal axis.

In a next sub-step, the lifting equipment 14 can now be removed (see figure 14).

After locking, the next bottom weight section 26, which has joint elements 33 at both the bottom end 31 and the top end 32 can be provided and jointed or armed to the lower section 25 on the same principle as described above. Following the above described sub-steps, the intermediate section 26 is provided by the lifting equipment 34 and is coupled to the top end 31 of the lower section 25. Afterwards, the locking of the lower section 25 is released, e.g. the locking plates 30 are removed and set aside. Since the intermediate section 26 is coupled and held by the lifting equipment, both sections 25 and 26 can be lowered until a predetermined position relative to the well 3 with regard to its longitudinal axis (bore hole axis) is achieved. Now the intermediate section 26 is locked to the ground plate 28 as described above. Next similar to the above description, the top section 27, which has joint elements 33 at both ends 31 and 32, is provided and coupled to the intermediate section 26 and the bottom weight 20, i.e. all three sections 25 to 27, are lowered until the top section 27 can be locked to the ground plate 28.

For example, joints between the bottom weight sections 25 to 27 should be made with locking a respective bottom weight section 25 to 27 to the ground plate 28. The joint is for example done by one or more alignment pins being punched through the joint elements 33, thus aligning and coupling the bottom weight sections 25 to 27. Threaded locking pins are mounted from the opposite direction, while the mounting pins protrude out of the connection. Finally, the connection is secured with nuts. Many other locking mechanisms are possible.

Further, as can be seen in the figures, the joint elements 33 are arranged such that a mounting direction (axis of mounting holes) changes at the ends 31, 32 at 90°. In different embodiments, other arrangements are possible. For example, the joint elements 33 generally are differently orientated to each other at the top and the bottom of a weight section.

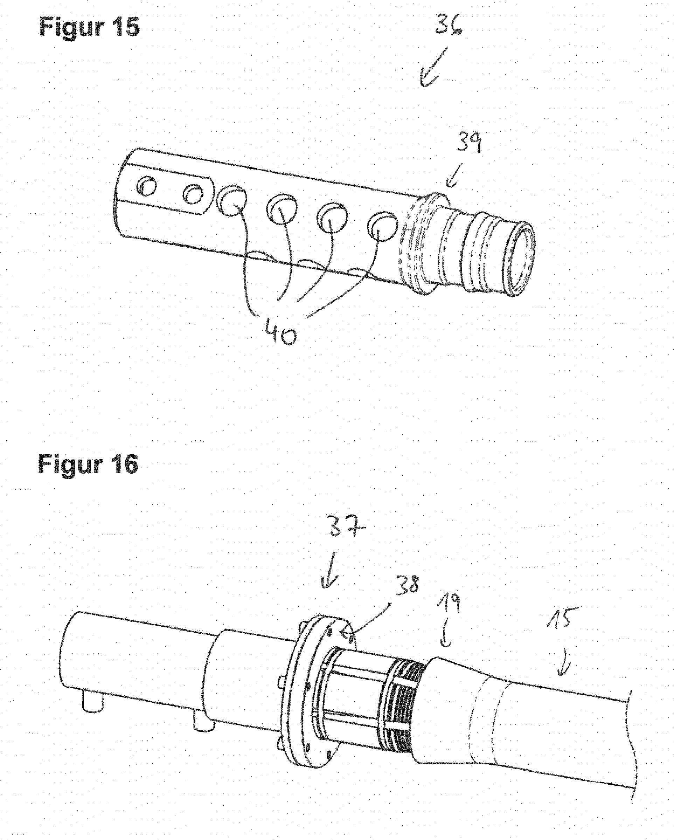

Figures 15 to 18 show the connection of pipe 8 (or pipe 15 respectively) to the top end 32 of the top section 27.

Figure 15 shows an exemplary embodiment of a connection adapter 36, which is coupled to the bottom end 15 of riser pipe 8/15 and the top end 32 of the top section 27. The connection adapter 36 can also be named base connector.

The connection adapter 36 is connected to the pipe 8/15 by expanding the pipe 8/15 with an expansion tool 37 (see figure 16). The expansion is for example done in several steps depending on the temperature of the pipe 8/15. In general, warmer the pipe 8/15 is, the easier it is to expand, correspondingly the cold tube does not recover quickly. The expansion tool 37 is pushed into the pipe 8/15, as deep as it goes, e.g. until a predetermined position, and with hydraulically actuated segment jaws, the pipe 8/15 is expanded until it can abut against an end surface 38 of the expansion tool 37 in an axial direction. The expansion tool 37 is operated by a manual valve in a hydraulic machine. The above description of the expansion tool 37 is not limiting. Other embodiments for the expansion tool 37 are possible.

Immediately or shortly after the expansion, the connection adapter 36 is installed at the bottom end 19 of the pipe 8/15 against an abutting flange 39 of the connection adapter 36. The connection adapter 36 could be turned/rotated while it is loose to the correct position compared to the corresponding joint elements 33 of the top section 27. The lifting equipment could also be turned later. The pipe 8/15 shrinks around the connection adapter 36, e.g. in about 30 minutes depending on the temperature. Shrinkage can be accelerated by a hot air blower. Thus, a shrink-fit connection is established.

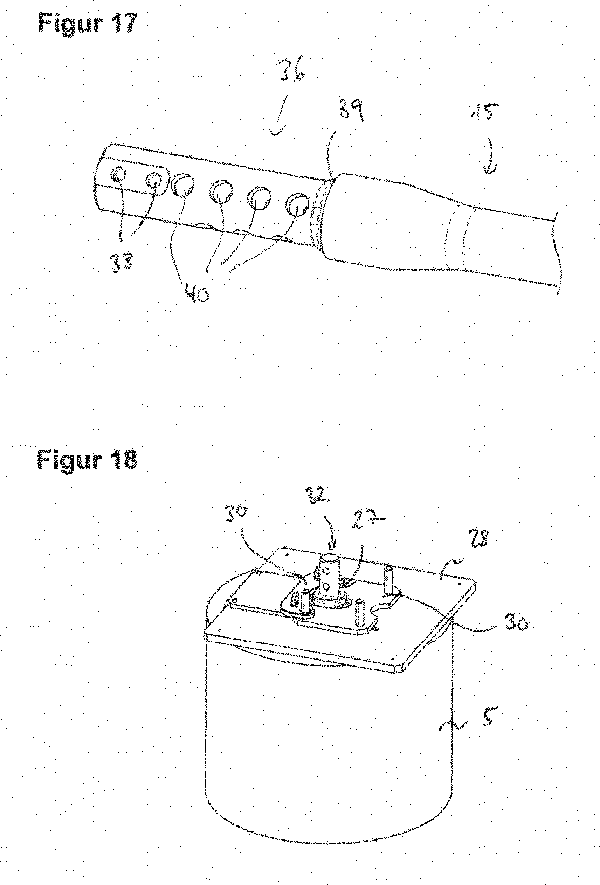

Next, the connection adapter 36 is jointed to the top end 32 of the top section 27 with the joint elements 33 (mounting holes) similar to the description above. See figure 18 showing the top end 32 of the top section 27.

As can be seen, the connection adapter 36 comprises several fluid openings 40 between the abutting flange 39 and the joint elements 33 along the longitudinal axis. These openings are provided for fluid flow into or out of the attached riser pipe 8/15.

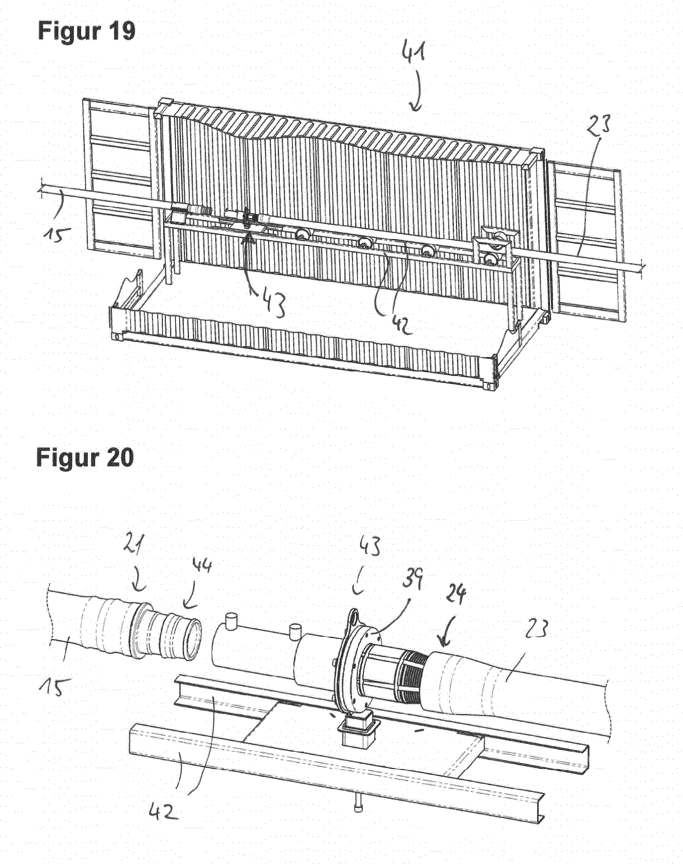

Figures 19 and 20 show an embodiment of the coupling of two pipes together, e.g. pipes 15 and 23. The connection happens for example in a housing 41, through which the pipes 15 and 23 are guided. The pipes 15, 23 are guided via wheels and rolls, which are arranged along a support structure, which comprises guiding rails 42. An expansion tool 43, e.g. the expansion tool 37 as above or similar to the expansion tool 37 above, is provided and is able to slide along the guiding rails 42. Also the expansion tool 43 can be changed in its orientation about 180° degree to expand ends of both pipes 15 and 23. Top end 21 of pipe 15 as well as bottom end 24 of pipe 23 are expanded and pushed over a pipe connector element 44, e.g. a fitting, to be connected by a shrink fit connection as described above. No mechanical locking is needed between the two pipes 15, 23 such that the overall outer diameter does not or only slightly increase. This is advantageous in order that the pipes 15, 23 can be easily guided through the pipe brake apparatus 17 and/or the counter winding apparatus 18.

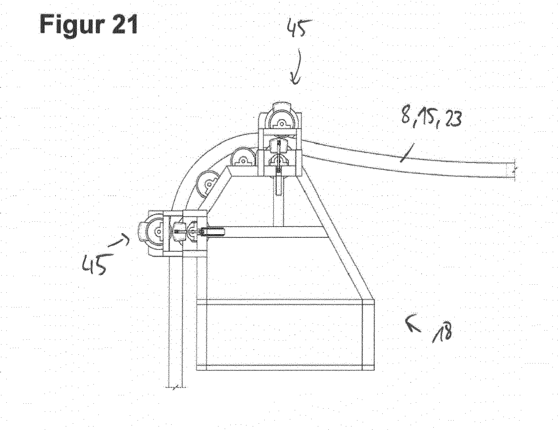

Figure 21 shows an embodiment of the counter winding apparatus 18, through which a respective pipe 8, 15, 23 is guided and counter wound. In particular, wheel pairs 45 are supported such that the respective pipes 8, 15, 23 are guided along approx. 90° and counter bent.

It is noted that the above description of the embodiments has the functions, effects and advantages as described. However, the embodiments described with regard to the figures are not limited thereto. Alternative embodiments and different combinations of the above described features are possible. For example, the pipe feeding apparatus 16, the pipe brake apparatus 17 and/or the counter winding apparatus 18 can have different or other embodiments as long as they provide the described functions. For example, more or less bottom weight sections can be provided, in particular depending on a overall length of the riser pipe 9. Also, the installation of the bottom weights could be differently. For example, different embodiment for the expansion tools 37 and 43 are possible.

Further, please note that the values given above are preferred examples, but could be different, as long as it is not departed from the described inventive idea.

### Reference signs

- 1: standing column well system
- 2: ground
- 3: well
- 4: manhole
- 5: steel or PVC pipe
- 6: cover
- 7: water level
- 8: riser pipe
- 9: pump
- 10: outlet pipe
- 11: inlet pipe
- 12: bottom end
- 13: installation system
- 14: pipe coil
- 15: plastic pipe
- 16: pipe feeding apparatus
- 17: pipe brake apparatus
- 18: counter winding apparatus
- 19: bottom end of pipe 15
- 20: bottom weight
- 21: top end of pipe 15
- 22: further pipe coil
- 23: further plastic pipe
- 24: bottom end of pipe 23
- 25: lower section
- 26: intermediate section
- 27: top section
- 28: ground plate
- 29: opening
- 30: locking plate
- 31: bottom end
- 32: top end
- 33: joint element
- 34: lifting equipment
- 35: annular groove
- 36: connection adapter
- 37: expansion tool
- 38: end surface
- 39: abutting flange
- 40: fluid opening
- 41: housing
- 42: guiding rail
- 43: expansion tool
- 44: pipe connector element
- 45: wheel pair
- S1-S9: step

## Claims

1. Standing column well system (1), comprising a well (3) and a riser pipe (8) arranged in the well (3), wherein the riser pipe (8) is made of an uncoiled pipe (15).

2. Standing column well system (1) according to claim 1, wherein a bottom weight (20) is attached to a bottom end (19) of the riser pipe (8).

3. Standing column well system (1) according to claim 1 or 2, wherein the riser pipe (8) is a plastic pipe comprising one or more polyolefins or being made of one or more polyolefins, in particular wherein the riser pipe (8) is a cross-linked PE pipe, a PE-X pipe or a PE-RT pipe or wherein the riser pipe (8) is made of cross-linked PE, PE-X or PE-RT.

4. Standing column well system (1) according to claim 1 or 2, wherein the riser pipe (8) is a metal plastic composite pipe or metal pipe or is made of metal plastic composite material or metal.

5. Standing column well system (1) according to any of the preceding claims, wherein the riser pipe (8) is counter wound after being uncoiled and before being inserted into the well (3).

6. Standing column well system (1) according to any of the preceding claims, wherein the riser pipe (8) comprises at least two pipe sections (15, 23), which are serially interconnected by a shrink fit connection.

7. Standing column well system (1) according to any of the preceding claims, wherein the bottom weight (20) is connected to the bottom end (19) of the riser pipe (8) by a shrink fit connection.

8. Standing column well system (1) according to any of the preceding claims, wherein the bottom weight (20) comprises one more bottom weight sections (25 to 27), which are serially interconnected.

9. Standing column well system (1) according to any of the preceding claims, wherein a maximum diameter of the bottom weight (20) does not exceed or only exceed about 30 % over the outer diameter of the riser pipe (8).

10. Standing column well system (1) according to any of the preceding claims, wherein the bottom weight (20) and/or the bottom end (19) of the riser pipe (8) comprises one or more openings (40) in order that fluid can enter or leave the riser pipe (8).

11. Method for installation of a riser pipe (8) of a standing column well system (1), in particular a standing column well system (1) according to any of the claims 1 to 10, the method comprising the steps of:
- uncoiling a riser pipe (8, 15) from a pipe coil (14),
- feeding the riser pipe (8) into the well (3).

12. Method according to claim 11, wherein - before the riser pipe (8) is fed into the well (3) - a bottom weight (20) is attached to a bottom end (19) of the uncoiled riser pipe (8) and the riser pipe (8) is fed into the well (3) with the attached bottom weight (20).

13. Method according to claim 11 or 12, wherein - before the riser pipe (8) is fed into the well (3) - the riser pipe (8) is guided through a counter winding apparatus (18) for counter winding the riser pipe (8).

14. Method according to any of claims 11 to 13, wherein the feeding of the riser pipe (8) is controlled by a pipe feeding apparatus (16), which is configured for uncoiling the riser pipe (8) from the pipe coil, for feeding the riser pipe (8) forwards into the well (3), for slowing or braking the riser pipe (8) feeding and feeding the riser pipe (8) backwards.

15. Method according to any of claims 11 to 14, wherein a pipe brake apparatus (17) is provided which can stop the feeding of the riser pipe (8).

16. Method according to any of claims 11 to 15, wherein the pipe coil (14) and/or the uncoiled riser pipe (8) is preheated prior to be fed into the well (3).

17. Method according to any of claims 11 to 16, wherein after fully uncoiling the riser pipe (8) from the pipe coil, the feeding of the riser pipe (8) is stopped and a top end (21) of the fully uncoiled riser pipe (8) is fluidically coupled to a further pipe (23) being uncoiled from a further pipe coil (22).

18. Method according to any of claims 11 to 17, wherein the step of attaching the bottom weight (20) to the bottom end (19) of the riser pipe (8) comprises the sub-steps of:
- at least partially inserting the bottom weight (20) into the well (3) such that the bottom weight (20) is accessible from outside the well (3),
- locking the bottom weight (20) in its position relative to the well (3) by a locking device (30),
- attaching the pipe (8) to the bottom weight (20).

19. Method according to any of claims 11 to 18, wherein the bottom weight (20) comprises at least a first bottom weight section (25) and a second bottom weight section (26), and wherein the step of attaching the bottom weight (20) to the bottom end (19) of the riser pipe (8) comprises the sub-steps of:
- at least partially inserting the first bottom weight section (25) into the well (3) such that the first bottom weight section (25) is accessible from outside the well (3),
- locking the first bottom weight section (25) in its position relative to the well (3) by a locking device (30),
- providing the second bottom weight section (30) and firmly connecting the first and second bottom weight sections (25, 26), and
- attaching the bottom end (19) of the riser pipe (8) to the second bottom weight section (26).

20. Installation system for installation of a riser pipe (8) of a standing column well system (1), in particular a standing column well system (1) and a method according to anyone of the preceding claims, the installation system comprising:
- a pipe coil (14) for a riser pipe (8) to be uncoiled.

21. Installation system according to claim 20, comprising at least one of the following:
- a bottom weight (20) to be attached to a bottom end (19) of the riser pipe (8)
- a counter winding apparatus (18) for counter winding the riser pipe (8);
- a pipe feeding apparatus (16) configured for uncoiling the riser pipe (8) from the pipe coil (14), for feeding the riser pipe (8) forwards into the well (3), for slowing or braking the riser pipe (8) feeding and feeding the riser pipe (8) backwards; and/or
- a pipe brake apparatus (17) configured to stop the feeding of the riser pipe (8).

22. Installation system according to claim 20 or 21, comprising a heat system in order to preheat the pipe coil and/or the riser pipe (8) prior to feeding the riser pipe (8) into the well (3).
